(19) Europäisches Patentamt
European Patent Office
Office européen des brevets

(11) Publication number: 0 001 635
B1

(12) # EUROPEAN PATENT SPECIFICATION

(45) Date of publication of patent specification: 21.10.81

(21) Application number: 78101174.7

(22) Date of filing: 18.10.78

(51) Int. Cl.³: C 09 D 3/66, C 08 L 61/00, C 08 L 63/00, C 08 L 67/00, C 08 L 29/00

(54) Curable polymer compositions containing glycol ethers as a reactive diluent.

(30) Priority: 25.10.77 US 845188
18.04.78 US 897321

(43) Date of publication of application:
02.05.79 Bulletin 79/9

(45) Publication of the grant of the European patent:
21.10.81 Bulletin 81/42

(84) Designated Contracting States:
BE CH DE FR GB NL SE

(56) References cited:
DE - B - 1 203 407
GB - A - 999 062
US - A - 3 238 160
US - A - 3 424 817
US - A - 3 920 595

(73) Proprietor: THE DOW CHEMICAL COMPANY
2030 Abbott Road Post Office Box 1967
Midland, Michigan 48640 (US)

(72) Inventor: Smith, Harry Andrew
4608 James Drive
Midland Michigan (US)

(74) Representative: Casalonga, Axel et al,
Bureau D.A.Casalonga Lilienstrasse 77
D-8000 München 80 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 001 635 B1

Courier Press, Leamington Spa, England.

# Curable polymer compositions containing glycol ethers as a reactive diluent

The invention relates to the use of a reactive diluent in common coating compositions made up of hydroxy-functional resins which are curable, by means of an aminoplast or phenolic resin, upon heating in the presence of a strong acid catalyst. Presently, low boiling diluents are employed as solvents for coating compositions and are removed upon heating said compositions in the curing process.

In United States Patent 3,238,160, Hensen, March 1, 1960, alkyd resins are cured with various formaldehyde based resins from a solvent of 150°C—300°C boiling point. The amount of solvent is at least 2—3 times the amounts employed herein. United States Patent 3,920,595, Anderson et al, November 18, 1975, teaches solvent based alkyds cured with aminoplast resins. The solvents described are alkanols and polyols. United States Patent 4,038,225, Takaya et al, July 26, 1977, shows hydrocarbons, alkanols and low-boiling glycol ethers as solvents for an alkyd-aminoplast coating system.

The present *invention comprises* standard coating mixtures of non-aminoplast hydroxy-functional resins in admixture with aminoplast or phenolic curing agents therefor and a catalyst for the reaction between the two and, as a reactive diluent, a polyglycol monoether which boils at 150°C at 760 mm mercury pressure, preferably at 300°C or greater. The invention composition differs from the solvent-based coating previously employed in the art that it may be permanently incorporated, preferably with about 80 percent or greater and more preferably about 90 percent or greater retention, in the final coating instead of being evaporated as is commonly the case, and the resultant coatings do not suffer losses in their physical properties as might be expected.

The invention is a curable coating composition comprising (A) 100 parts by weight of a non-aminoplast hydroxyl-bearing polymer which represents x-hydroxyl equivalents; (B) 10 to 100 parts by weight which represents y-hydroxyl equivalents of a polyglycol monoether represented by the formula:

$$RO\!\left(CH_2\underset{\displaystyle R'}{\underset{|}{C}}HO\right)_{n}H$$

wherein R is a hydrocarbyl group of 1 to 20 carbon atoms, R' is independently hydrogen or methyl, and n is a positive number, said polyglycol monoether having an atmospheric boiling point of about 150°C of greater; (C) an aminoplast or phenolic resole resin, capable of curing component (A) to a tack-free state, present in a quantity such that z equivalents of said resin are present, z being equal to from 2(x+y) up to 10(x+y); and (D) a catalytic amount of a catalyst which catalyzes the reaction between components (A) and (C).

Preferably, the invention is directed to the above composition containing from 10 to 100 parts by weight of component (B) having an atmospheric boiling point of at least 300°C, and containing z equivalents of component (C), where z is equal to from 2(x+y) to 10(x+y).

The invention further comprises the above composition which has been heated at a temperature and for a length of time sufficient to cure same to a tack-free finish. The inventive composition may optionally comprise a pigment of the nature commonly employed in paints and other compositions as well as other common additives such as flow control agents and wetting agents.

The terms x, y and z will be explained in the following description.

Component (A) of the invention is suitably any hydroxyl-bearing polymer which is commonly cured with an aminoplast or phenolic resin to form films and coatings. Component (A) suitably has at least two and preferably three or more free-hydroxyl groups. Such polymers are the free-hydroxyl containing polyesters or alkyds such as are obtained by condensing di- or polycarboxylic acids with diols, glycols, triols or higher polyols in such a manner and using such ratios that free-hydroxyls remain unreacted for further curing by means of the aminoplast resin. Solid epoxy resins, such as extended diglycidyl ethers of bisphenols, for example:

$$\overset{\frown}{OCH_2C}HCH_2O\!-\!\!\left[\emptyset\!-\!C(CH_3)_2\!-\!\emptyset OCH_2CH(OH)CH_2O\right]_m\!\emptyset\!-\!C(CH_3)_2\emptyset OCH_2\overset{\frown}{CHCH_2O}$$

wherein m ≥ 1, are also suitable as component (A).

Another class of polymers suitably employed as component (A) are those obtained by polymerization of the unsaturated portion of vinyl monomers which bear or may be modified to bear free-hydroxyl groups which are ultimately pendant from the polyethylenic backbone. Examples of such polymers are polyvinyl alcohols which may be obtained by the hydrolysis of polymers derived from the polymerization of vinyl acetate, with or without other vinylic unsaturated comonomers, polymers of hydroxyalkyl acrylates such as hydroxyethyl acrylate and hydroxypropyl acrylate, with or without other comonomers, and poly($\alpha,\beta$-unsaturated acids) derived from the polymerization of $\alpha,\beta$-unsaturated monomeric acids, with or without other comonomers, or by the polymerization and subsequent hydrolysis of esters thereof. Such monomeric acids include acrylic acid, methacrylic acid, itaconic acid, maleic acid, citraconic acid and cinnamic acid.

Component (A) polymers bearing the necessary hydroxyl-functional groups have an equivalent weight which may be calculated by standard methods. For the purposes of this invention, 100 parts by weight of said polymer has arbitrarily been designated as x-hydroxyl equivalents. For example, if a given polymer is known to have an equivalent weight of 20 grams per equivalent, in the inventive composition comprising 100 grams of said polymer, x equals 5. This number x is used together with another arbitrary function y for component (B) to determine the appropriate amount of component (C) to be employed in the inventive composition. This is discussed more fully below. For the purpose of this invention, free carboxylic acid groups, —COOH, should be considered as one hydroxyl functional group and oxirane groups as two hydroxyl functional groups.

Component (B) comprises about 10 to about 100 parts by weight, preferably about 20 to about 85 and more preferably about 30 to about 70 parts by weight, of a polyglycol monoether represented by the formula:

$$RO{-}\!\left(CH_2\underset{\textstyle R'}{\underset{|}{CH}}O\right)_{\!n}\!{-}H$$

which has an atmospheric boiling point (i.e., the boiling point at 760 mm mercury) of about 150°c or greater. Such polyglycol monoethers are well known in the art and are prepared by reacting ethylene oxide, propylene oxide or mixtures thereof with an initiator ROH to give a mixture of products of varying lengths in the oxyalkylene chain. For this reason, n represents a statistical weight average indicating the average number of oxyalkylene units per mole of the monoether product. The chain

$$-\!\left(CH_2\underset{\textstyle R'}{\underset{|}{CH}}O\right)_{\!n}\!-$$

may consist of oxyethylene units alone, oxypropylene units alone, or mixtures thereof, in either block or heteric arrangement which is determined by either sequential addition of ethylene oxide or propylene oxide or random addition thereof.

Preferably, R′ is methyl in the present compositions. This is preferred to provide sufficient water resistance in a cured composition. Preferably, n is about 4 or greater and most preferably from 4 to 4.3. R is the hydrocarbyl group remaining from the initiator molecule and is suitably selected from alkyl, alkenyl, alkaryl, aralkyl and aryl groups comprising 1 to about 20 carbon atoms. Preferably, R is alkyl of 1 to 15 carbon atoms, phenyl, or alkylphenyl of 7 to 15 carbon atoms and most preferably R is an alkyl group of 1 to 4 carbon atoms. In one preferred embodiment, the number of carbon atoms in R and

$$-\!\left(CH_2\underset{\textstyle R'}{\underset{|}{CH}}O\right)_{\!n}\!-$$

combined totals about 12 or greater. Some examples of suitable monoethers for component (B) are shown in the following table together with their approximate atmospheric boiling points.

TABLE I

COMPONENT (B)

| R | R′ | n | Approx. Atmosph. Boiling Point °C |
|---|---|---|---|
| $CH_3$ | all $CH_3$ | 5.5 | 367° |
| $CH_3$ | all $CH_3$ | 4.3 | 307° |
| $C_{13}H_{28}$ | all H | 3 | >350° |
| $C_4H$® | all $CH_3$ | 8 | >350° |

Preferably, component (B) has an atmospheric boiling point of about 310°C or greater.

Component (C) is an aminoplast or phenolic resin, capable of curing component (A) to a tack-free

state, and is unreactive in the composition under normal conditions but becomes reactive with component (A) at elevated temperatures of the order of 100°C—250°C, preferably 125°C—200°C for a time sufficient to create the desired tack-free state, usually about 5—60 minutes or more. Suitable curing agents are aminoplast resins such as melamine-formaldehyde condensation products or urea-formaldehyde condensation products commonly available for this purpose and phenolic resole resins derived from the condensation of phenols and aldehydes and which are commonly used to cure the hydroxy-bearing solid epoxy resins previously described. Melamine-formaldehyde condensation products, such as hexamethoxymethyl melamine, give products of superior quality in the invention.

The quantity of component (C) to be employed is such that z equivalents of the aminoplast or phenolic resin are present in the invention composition, z being equal to from 2(x+y) up to about 10(x+y). The equivalent weights of aminoplast and phenolic resins are commonly available from the manufacturers thereof. Knowing the hydroxyl equivalents present in components (A) and (B), the amount of component (C) can then be calculated on the basis of z which is derivable from x and y. Preferably z is equal to from 2.5 times the sum of x+y to 10(x+y). More preferably, z is less than about 8(x+y), and is most preferably less than 7(x+y).

As the examples illustrate, varied amounts of aminoplast curing agent, Component (C), are needed to attain better than about 90 percent retention of Component (B). Roughly, for the polyester of Examples 1—3, and 15—17, z/(x+y) will be about 2 or greater; for the acrylic of Examples 4—9 about 3.5 or greater; for the epoxy of Examples 10—12 about 6.5 or greater; and for the acrylic of Examples 13—14 about 3 or greater.

Component (D) is a catalyst which catalyzes the reaction between the hydroxyl-bearing component (A) polymer and the aminoplast or phenolic curing agent which is component (C). Suitably, any strong acid may be employed for this purpose. Typical such catalysts are organosulfonic acids or their amine salts, sulfuric acid or its amine salts, zinc fluoroborate, phosphoric acid and boron trifluoride, (or its etherate). An organosulfonic acid or its amine salt such as toluenesulfonic acid is preferred as component (D). Suitably, about 0.05 to about 2 parts by weight of component (D) are sufficient to catalyze the curing reaction, and preferably less than about 0.1 and preferably less than about 1 part by weight is employed.

The curable composition of the invention is suitably prepared by simply mixing the four components in any order at ambient temperature or slightly elevated temperatures less than the temperature required for the curing reaction. The curable composition of the invention may suitably be heated to about 50°C—100°C without effecting a premature cure. This facilitates handling, mixing and application of the invention composition. If desired, standard pigments such as titanium oxides, chromium oxides and zinc oxides may be added in suitable amounts to impart a desired color to the invention composition. Similarly, surfactants, wetting agents or flow control agents may optionally be added to the composition as is common in the art.

The invention composition is applied to a substrate by any suitable means to form a film or coating thereon, and the film or coating is then heated to the curing temperature by means commonly used in the art such as a hot air oven or a bank of infrared heat lamps.

The following examples serve to illustrate the compositions of the invention and the curing and use thereof for the preparation of films and coatings. Unless otherwise designated, the term "parts" when employed herein means parts by weight. "Hot tack" is measured by drawing a wooden tongue depressor across a cured coating immediately after curing. If no mark is visible, the coating is considered tack-free.

### Example 1
### Polyester Based Composition

Five grams of a commercial polyester containing 10 percent by weight ethoxyethyl acetate is blended with 1.64 grams polypropylene glycol monomethyl ether, which is a component (B) represented by the formula:

$$CH_3O{-}\!\!\left(CH_2\underset{\displaystyle CH_3}{\underset{|}{C}}HO\right)\!\!{-}_{4.3}H$$

2.43 grams hexamethoxymethyl melamine is added as component (C), this amount being such that z is equal to 2.0(x+y) equivalents, and 0.09 grams of a 96 percent by weight sulfuric acid solution is blended in with the other three components. This composition is cast as a film on an aluminum panel and cured at 150°C for 5 minutes. The cured film exhibits no hot tack, has a Gardner reverse impact resistance of about 30 inch pounds (34.6 kg-cm) and shows good solvent resistance. A weight loss of 14 percent occurs and 100 percent of component (B) is retained in the coating.

### Control Run A

In the manner of Example 1, a composition of like makeup is prepared except that component (B) is replaced with an equal weight of ethoxyethyl acetate and the quantity of component (C) is reduced to

1.93 grams, the amount of curing agent being such that z is about equal to $2.3(x+y)$. A film is cast and cured in the same fashion as in Example 1. The cured film had no hot tack, a reverse impact resistance of 20 inch pounds (23.0 kg-cm) and good solvent resistance. However, there was about 37 percent weight loss upon curing, or about 100 percent of the volatiles, including the solvent.

### Examples 2 and 3 and Control B
### Polyester Based Compositions

In the same manner as Example 1 Control A, a control and two compositions of the invention are prepared, coated and cured under the same conditions and utilizing the same materials for components (A), (B), (C) and (D) as in Example 1. In Examples 2 and 3 and control B, the quantities of components (B) or (C) are varied to show the effect on physical properties. These variables and their effects on the physical properties of each composition when cured on aluminum panels are shown in the following table.

TABLE II

Polyester Based Compositions

Examples 1—3 and Controls A and B

| Example No. | 1 | Control A | Control B | 2 | 3 |
|---|---|---|---|---|---|
| Component (A) (10% solvent) | 5 g | 5 g | 5 g | 5 g | 5 g |
| Component (B) | 1.64 g | None | 1.64 g | 1.64 g | 3.00 g |
| Component (C) | 2.43 g | 1.93 g | 2.27 g | 2.61 g | 3.80 g |
| $z/(x+y)$ | 2.0 | 2.3 | 1.9 | 2.2 | 2.5 |
| Component (D) | .09 g | .09 g | .09 g | .09 g | .09 g |
| **Physical Properties** | | | | | |
| Hot tack | None | None | None | None | None |
| Reverse Impact, in-lb (kg-cm) | 30 (34.6) | 20 (23.0) | 15 (17.3) | 25 (28.9) | 25 (28.9) |
| Weight loss | 14% | 37% | 29% | 22% | 31% |
| Component (B) Retention (in weight) | 100% | None | 47% | 82% | 100% |
| Water Resistance at 10 min. boil, % delam., % blush | no delam., 25% blush | 50% delam. | 50% delam., 50% blush | no delam., 15% blush | 15% delam. |

### Examples 4—9
### Acrylic Based Compositions

3.5 grams of a commercial acrylic resin is blended, with 3.5 grams of a 90:10 (volume) xylene:n-butanol mixture as Control C and with Component (B) of Example 1 in Examples 4—9. To each are

added, as Component (C), melamine-formaldehyde resin (60 percent by weight solids) and 0.12 gram of toluenesulfonic acid ammonium salt as catalyst. In Examples 4—9, Components (B) and (C) are varied to illustrate their effects on physical properties. After curing at about 150°C for about 30 minutes, on aluminum panels, the properties exhibited by the cured coatings are shown in Table III, below.

TABLE III

Acrylic Based Compositions

| Example No. | Control C | 4 | 5 | 6 | 7 | 8 | 9 |
|---|---|---|---|---|---|---|---|
| * | | | | | | | |
| Component (A)** | 7.0*** | 4.2 | 4.2 | 4.2 | 4.2 | 4.2 | 4.2 |
| Component (B) | None | 1.0 | 1.5 | 1.5 | 1.5 | 3.0 | 3.0 |
| Component (C) | 3.0 | 3.07 | 2.94 | 3.43 | 4.35 | 5.77 | 3.22 |
| Component (D) | 0.12 | 0.12 | 0.12 | 0.12 | 0.12 | 0.12 | 0.12 |
| z/(x+y) | 9.4 | 4.4 | 3.4 | 3.8 | 4.9 | 3.9 | 2.2 |
| Physical Properties | | | | | | | |
| Hot Tack | None | None | None | None | None | None | None |
| Weight Loss | 45% | 37% | 36% | 36% | 34% | 37% | 51% |
| Component (B) Retention (by weight) | None | 100% | 94% | 100% | 100% | 97% | 28% |
| Water Resistance at 10 min. boil | 5% delam. | no delam. | no delam. | 5% delam. | 75% delam. | 95% delam. | 60% delam. |

*Components (A)—(D) are all parts by weight.

**Includes 16% solvent — 90/10 (vol.) xylene/n-butanol.

***Includes 50% solvent — 90/10 (vol.) xylene/n-butanol.

Examples 10—12
Epoxy Resin-Based Compositions

7.0 grams of a commercial epoxy resin is combined with 7.0 grams of ethoxyethyl acetate for Control E or 7.0 grams Component (B) of Example 1. To this mixture are added varied amounts of Component (C) and 0.12 gram of toluenesulfonic acid ammonium salt as Component (D). After curing at 175°C for 30 minutes on aluminum panels the properties exhibited by the cured coatings were tested and shown in Table IV.

TABLE IV

Epoxy Resin-Based Compositions

| Example No. | Control E | 10 | 11 | 12 |
|---|---|---|---|---|
| * | | | | |
| Component (A) | 7.0 | 7.0 | 7.0 | 7.0 |
| Ethoxyethyl acetate | 7.0 | None | None | None |
| Component (B) | None | 7.0 | 7.0 | 7.0 |
| Component (C) | 9.22 | 15.02 | 24.40 | 30.03 |
| Component (D) | 0.12 | 0.12 | 0.12 | 0.12 |
| z/(x+y) | 8.5 | 4.0 | 6.5 | 8.0 |
| Physical Properties | | | | |
| Hot Tack | None | None | None | None |
| Weight Loss | 48% | 49% | 46% | 45% |
| Component (B) Retention (by weight) | None | 52% | 99% | 100% |
| Water Resistance at 60 min boil | 100% blush | no effect | no effect | no effect |

*Components (A)—(D) and Ethoxyethyl Acetate are all parts by weight.

Examples 13—14
Acrylic Latex Based Compositions

A mixture of 2.5 grams of an acrylic latex (38 percent by weight solids) having a hydroxyl equivalent weight of 867 and comprising butyl acrylate units, styrene units, hydroxypropyl acrylate units and methacrylic acid units as Component (A), with 0.3 gram of the phenyl ether of ethylene glycol (boiling point 245°C) in Control Runs G and H and with 0.3 gram of Component (B) of Example 1 in Examples 13—14 is prepared. To this are added varied amounts of the hexamethoxymethyl melamine used in Example 1 as Component (C) and 0.02 gram of toluenesulfonic acid ammonium salt as Component (D). After curing for 30 minutes at about 150°C on aluminum panels the properties exhibited by the cured coatings were tested and shown in Table V below.

TABLE V

Acrylic Latex-Based Compositions

| Example No. | Control G | Control H | 13 | 14 |
|---|---|---|---|---|
| * | | | | |
| Component (A) (62% water) | 2.5 | 2.5 | 2.5 | 2.5 |
| Ethylene glycol Phenyl ether | 0.3 | 0.3 | None | None |
| Component (B) | None | None | 0.3 | 0.3 |
| Component (C) | 0.22 | 1.08 | 0.44 | 0.72 |
| Component (D) | 0.02 | 0.02 | 0.02 | 0.02 |
| z/(x+y) | 2.9 | 5.0 | 3.0 | 5.0 |
| Physical Properties | | | | |
| Hot Tack | None | None | None | None |
| Reverse Impact, in-lb (kg-cm) | <10 (<11.5) | <10 (<11.5) | 10—20 (11.5—23.0) | 10—20 (11.5—23.0) |
| Weight Loss | 63% | 60% | 63% | 54% |
| Component (B) Retention (by weight) | None | None | 11% | 100% |
| Water Resistance at 60 min. boil, % delamination | 40% delam. | 30% delam. | 2% delam. | 10% delam. |

*Components (A)—(D) and Ethylene Glycol Phenyl ether are all parts by weight.

Examples 15—17
Various Reactive Diluents

Example 1 is repeated substituting 1.64 grams of various diluents of the formula

$$RO\!-\!\!\left(CH_2\underset{\displaystyle R'}{\underset{|}{C}}HO\right)_{\!n}\!H$$

wherein R, R′ and n have the same meanings as previously described for Component (B). After curing in the manner described in Example 1, the properties exhibited by the cured coatings are tested and shown in Table VI.

TABLE VI

Various Reactive Diluents

| Example No. | 15 | 16 | 17 |
|---|---|---|---|
| * | | | |
| Component (A) (10% solvent) | 5.0 | 5.0 | 5.0 |
| Component (B) | 1.64 | 1.64 | 1.64 |
| R | $C_{13}H_{28}$ | $CH_3$ | $C_4H_9$ |
| R′ | All H | All $CH_3$ | All $CH_3$ |
| n | 3 | 5.5 | 8 |
| Component (C) | 2.29 | 2.25 | 2.06 |
| Component (D) | 0.09 | 0.09 | 0.09 |
| z/(x+y) | 2 | 2 | 2 |
| **Physical Properties** | | | |
| Hot Tack | None | None | None |
| Reverse Impact, in-lb (kg-cm) | 20—30 (23.0—34.5) | 30 (34.5) | >40 (>46.0) |
| Weight Loss | 19% | 20% | 15% |
| Component (B) Retention (by weight) | 100% | 96% | 100% |
| Water Resistance at 60 min. boil, % delamination, % blush | 5% delam. 90% blush | no delam. no blush | no delam. 50% blush |

*Components (A)(D) are all parts by weight.

**Claims**

1. A curable coating composition comprising (A) a non-aminoplast hydroxyl bearing polymer representing x-hydroxyl equivalents; (B) a reactive liquid comprising an hydroxyl group; (C) a resin capable of curing component (A) to a tack-free state; and (D) a catalytic amount of a catalyst which catalyzes the reaction between components (A) and (C) characterized in that said non-aminoplast hydroxyl-bearing polymer is present in an amount of 100 parts by weight, said reactive liquid is a polyglycol monoether represented by formula

$$RO\!-\!\!(\!-CH_2\!-\!\!\underset{\displaystyle R'}{\underset{|}{CH}}O\!-\!)_{n}H$$

wherein R is a hydrocarbyl group of 1 to 20 carbon atoms, R′ is independently hydrogen or methyl, and n is a positive number, said polyglycol monoether has an atmospheric boiling point of about 150°C or greater and is present in an amount of 10—100 parts by weight representing y-hydroxyl equivalents; and said resin capable of curing (A) is an aminoplast or phenolic resole resin present in a quantity such that z equivalents of said resin are present, z being equal to from 2(x+y) up to 10 (x+y), a free

carboxylic group being considered as one hydroxyl functional group and an oxirane group as two hydroxyl functional groups.

2. The composition as claimed in claim 1 characterized in that component (B) has an atmospheric boiling point of at least 300°C and n is from 3 to 8.

3. The composition of claims 1 and 2 and further characterized in that it also contains a pigment.

**Revendications**

1. Composition de revêtement durcissable comprenant (A) un polymère portant un groupement hydroxyle non aminoplaste représentant x-équivalents hydroxyle; (B) un liquide réactif comprenant un groupement hydroxyle; (C) une résine capable de durcir le composant (A) jusqu'à un état non collant; et (D) une quantité catalytique d'un catalyseur qui catalyse la réaction entre les composants (A) et (C), caractérisée par le fait que ledit polymère portant un groupement hydroxyle non aminoplast, est présent dans une quantité de 100 parties en poids ledit liquide réactif est un mono-éther de polyglycol représenté par la formule:

$$RO\!+\!CH_2\!-\!\underset{\displaystyle R'}{\underset{|}{CHO}}\!+_n\!H$$

dans laquelle R est un groupement hydrocarbyle de 1 à 20 atomes de carbone, R' désigne indépendamment l'hydrogène ou méthyle et n est un nombre positif, ledit mono-éther de polyglycol a un point d'ébullition atmosphérique d'environ 150°C ou plus et est présent dans une quantité de 10—100 parties en poids représentant y-équivalent hydroxyle; ladite résine étant capable de durcir (A) et étant une résine aminoplaste ou phénolique résol présente dans des quantités telles que z-équivalents de ladite résine soient présents, z étant égal à 2(x+y) jusqu'à 10(x+y), un groupement carboxylique libre étant considéré comme un groupement fonctionnel hydroxyle et un groupement oxirane étant considéré comme deux groupements fonctionnels hydroxyles.

2. Composition selon la revendication 1, caractérisée par le fait que le composant (B) a un point d'ébullition atmosphérique d'au moins 300°C et n est égal de 3 à 10.

3. Composition selon les revendications 1 et 2, et caractérisée en plus par le fait qu'elle contient également un pigment.

**Patentansprüche**

1. Aushärtbare Beschichtungsmischung enthaltend (A) ein nichtaminoplastisches Hydroxyltragendes Polymer, das x Hydroxyl-äquivalente darstellt; (B) eine reaktionsfähige Flüssigkeit enthaltend eine Hydroxylgruppe; (C) ein Harz, das in der Lage ist, Bestandteil (A) zu einem nichtklebrigen Zustand auszuhärten; und (D) eine katalytische Menge eines Katalysators, der die Reaktion zwischen den Bestandteilen (A) und (C) katalysiert, dadurch gekennzeichnet, daß das nicht-aminoplastische Hydroxyl-tragende Polymer in einer Menge von 100 Gewichtsteilen vorliegt, die reaktionsfähige Flüssigkeit ein Polyglykol-Monoäther nach der Formel

$$RO\!+\!CH_2\!-\!\underset{\displaystyle R'}{\underset{|}{CHO}}\!+_n\!H$$

ist, in der bedeuten:
R = eine Hydrocarbylgruppe mit 1 bis 20 Kohlenstoffatomen, R' = unabhängig Wasserstoff oder Methyl, und n = eine positive Zahl, wobei der Polyglykol-Monoäther einen Siedepunkt in Atmosphäre von etwa 150°C oder darüber hat und in einer Menge von 10—100 Gewichtsteilen anwesend ist und y Hydroxyläquivalente darstellt; das (A) aushärtbare Harz ein Aminoplast oder ein Phenolresolharz ist, das in ausreichender Menge anwesend ist, so daß z Äquivalente des genannten Harzes anwesend sind, wobei z gleich ist von 2(x+y) bis 10(x+y), wobei eine freie Carboxylgruppe als eine funktionelle Hydroxylgruppe und eine Oxirangruppe als zwei funktionelle Hydroxylgruppen gelten.

2. Die Mischung gemäß Anspruch 1, dadurch gekennzeichnet, daß Bestandteil (R) einen Siedepunkt in Atmosphäre von mindestens 300°C hat und n 3 bis 8 ist.

3. Die Mischung gemäß Anspruch 1 und 2, und ferner dadurch gekennzeichnet, daß sie auch ein Pigment enthält.